# EUROPÄISCHE PATENTANMELDUNG

(11) **EP 2 573 892 A2**
(43) Veröffentlichungstag der Anmeldung: **27.03.2013**
(21) Anmeldenummer: 12183878.3
(22) Anmeldetag: 11.09.2012
(51) Int. Cl.: H02H 9/00

(54) **Elektrische Schaltung**

(30) Priorität: 26.09.2011 DE 102011083426
(71) Anmelder: GE Energy Power Conversion GmbH, 12277 Berlin (DE)
(72) Erfinder: Eggert, Bernhard Dr., 13591 Berlin (DE)
(74) Vertreter: Dreiss

(57) **Zusammenfassung**

Es wird eine elektrische Schaltung (10) beschrieben, die mit einem Stromrichter (12) versehen ist, an den ein Zwischenkreiskondensator (13) angeschlossen ist. Die Schaltung (10) ist weiterhin mit einem Netzfilter (14) versehen, das mindestens einen Filterkondensator (25) aufweist. Bei der Schaltung (10) ist eine Aufladeschaltung (15) vorhanden, die mindestens eine mit einem Energieversorgungsnetz (21) verbundene Serienschaltung bestehend aus einem ersten Schalter (33) und einem Aufladewiderstand (32) aufweist. Bei geschlossenem ersten Schalter (33) sind der Zwischenkreiskondensator (13) und der Filterkondensator (25) über den Aufladewiderstand (32) mit dem Energieversorgungsnetz (21) verbunden.

## Beschreibung

Die Erfindung betrifft eine elektrische Schaltung nach dem Oberbegriff des Anspruchs 1 sowie ein Verfahren nach dem Oberbegriff des Anspruchs 7.

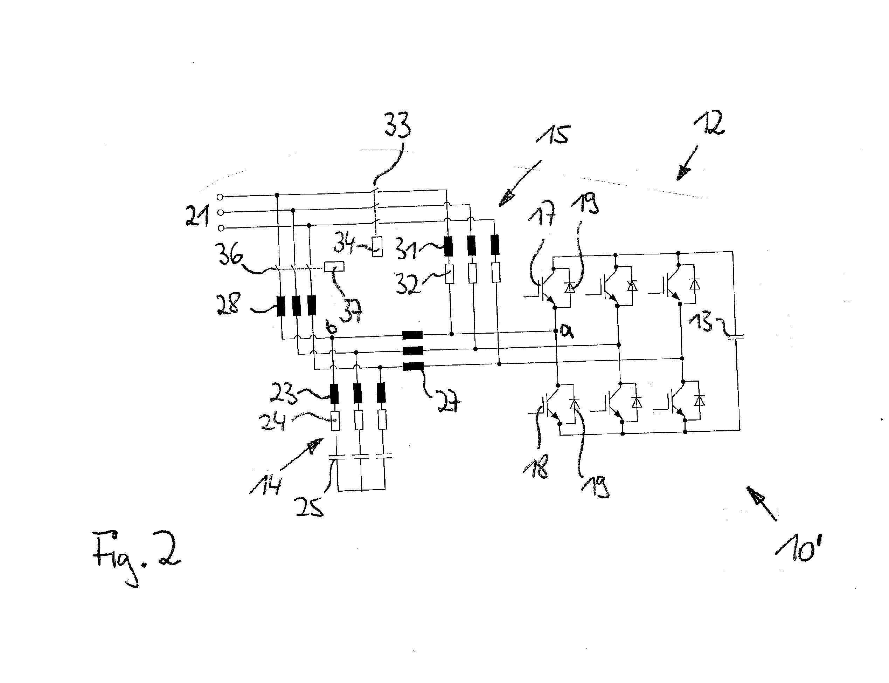

Eine derartige Schaltung ist beispielsweise aus der US 7,656,117 B2 bekannt. Dort ist in der Figur 2 ein Umrichter vorhanden, der mit einem Energieversorgungsnetz verbunden ist. Weiterhin ist ein Netzfilter vorgesehen, das mit Hilfe von Schaltern mit den Phasen des Energieversorgungsnetzes verbunden werden kann. Zum Aufladen der Filterkondensatoren des Netzfilters sind Filterwiderstände vorhanden, die über weitere Schalter den erstgenannten Schaltern parallelgeschaltet werden können.

Der Umrichter weist einen Gleichrichter und einen Wechselrichter auf, zwischen denen üblicherweise ein Zwischenkreiskondensator vorhanden ist. Dieser Zwischenkreiskondensator muss vor einem Netzbetrieb aufgeladen werden. Hierzu kann in bekannter Weise eine dem Netzfilter zugeordnete Parallelschaltung eines Hauptschalters und eines zuschaltbaren Aufladewiderstands pro Phase verwendet werden.

Insgesamt sind damit für das Aufladen der vorhandenen Kondensatoren mindestens vier Schalteinrichtungen erforderlich.

Aufgabe der Erfindung ist es, eine elektrische Schaltung zu schaffen, die ein Aufladen der Kondensatoren mit einem geringeren schaltungstechnischen Aufwand ermöglicht.

Die Erfindung löst diese Aufgabe durch eine elektrische Schaltung nach dem Anspruch 1 sowie durch ein Verfahren nach dem Anspruch 7.

Bei der Erfindung ist ein Stromrichter vorhanden, an den ein Zwischenkreiskondensator angeschlossen ist. Es ist ein Netzfilter vorhanden, das mindestens einen Filterkondensator aufweist. Und es ist eine Aufladeschaltung vorhanden, die mindestens eine mit einem Energieversorgungsnetz verbundene Serienschaltung bestehend aus einem ersten Schalter und einem Aufladewiderstand aufweist. Erfindungsgemäß sind bei geschlossenem ersten Schalter der Zwischenkreiskondensator und der Filterkondensator über den Aufladewiderstand mit dem Energieversorgungsnetz verbunden.

Der bzw. die Zwischenkreiskondensator/en und der bzw. die Filterkondensator/en werden also über denselben Aufladewiderstand und denselben zugehörigen Schalter aufgeladen. Es sind also keine unterschiedlichen Schalteinrichtungen für das Aufladen der Zwischenkreiskondensatoren einerseits und für das Aufladen der Filterkondensatoren andererseits erforderlich. Die Anzahl der vorhandenen Schalteinrichtungen ist somit bei der Erfindung geringer als beim Stand der Technik. Dies stellt eine wesentliche Kostenersparnis dar.

Vorzugsweise wird das Aufladen des Zwischenkreiskondensators und des Filterkondensators zum Starten des Betriebs des Stromrichters durchgeführt, also zeitlich vor einem Normalbetrieb des Stromrichters.

Bei einer Weiterbildung der Erfindung ist der Serienschaltung mindestens ein zweiter Schalter parallelgeschaltet, der bei geschlossenem ersten Schalter geöffnet ist. Im Normalbetrieb des Stromrichters wird der erste Schalter hingegen geöffnet und der zweite Schalter wird geschlossen.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

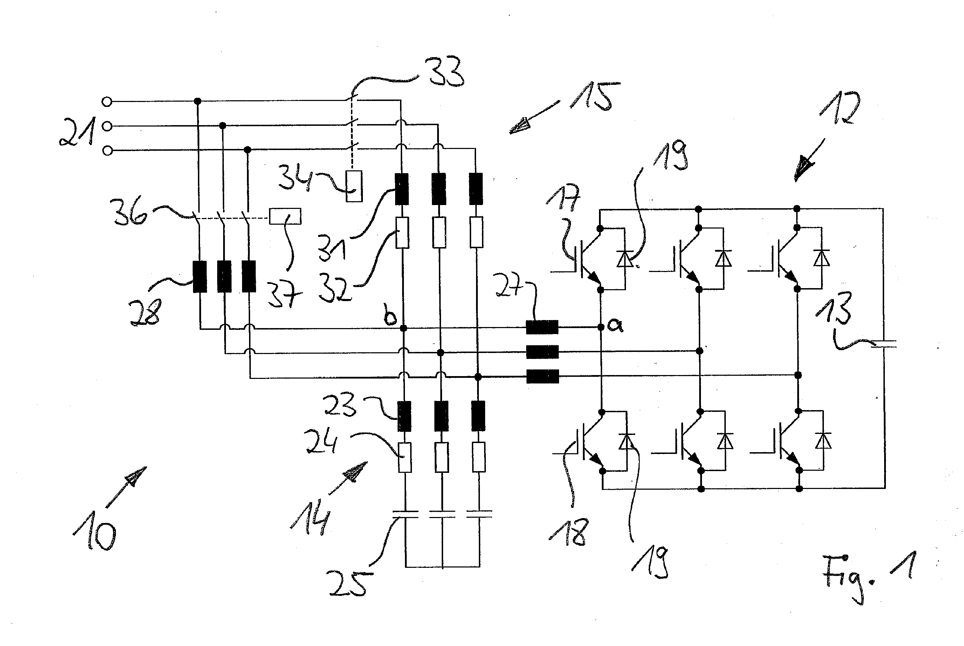

Die Figuren 1 und 2 der Zeichnung zeigen schematische Schaltbilder von Ausführungsbeispielen einer erfindungsgemäßen elektrischen Schaltung.

In der Figur 1 ist eine elektrische Schaltung 10 gezeigt, die dreiphasig ausgebildet ist und einen Stromrichter 12, einen Zwischenkreiskondensator 13, ein Netzfilter 14 sowie eine Aufladeschaltung 15 aufweist.

Der Stromrichter 12 ist beispielhaft zweistufig ausgebildet. Jede Phase des Stromrichters 12 weist eine Serienschaltung aus zwei Schaltern 17, 18 mit jeweils einer gegensinnig parallelgeschalteten Diode 19 auf. Der Verbindungspunkt a der beiden Schalter 17, 18 jeder Phase ist mit einer der Phasen eines elektrischen Energieversorgungsnetzes 21 koppelbar. An die beiden äußeren Anschlusspunkte der drei Serienschaltungen ist der Zwischenkreiskondensator 13 angeschlossen.

Die Schalter 17, 18 können in beliebiger Weise realisiert sein, beispielsweise als IGBTs (IGBT = insulated gate bipolar transistor). Es können anstelle der einzelnen Schalter 17, 18 auch Schaltermodule vorhanden sein, bei denen jeweils mehrere Schalter in Serie und/oder parallel geschaltet sind. Letzteres gilt entsprechend auch für die einzelnen Dioden 19. Der Zwischenkreiskondensator 13 kann als Kondensatorbank ausgebildet sein, bei der mehrere Kondensatoren in Serie und/oder parallel geschaltet sind.

Es versteht sich, dass auch jegliche andersartige Ausbildung des Stromrichters 12 denkbar ist, beispielsweise dreistufige Stromrichter oder dergleichen.

Das Netzfilter 14 weist pro Phase eine Serienschaltung aus einer Filterspule 23, einem Filterwiderstand 24 und einem Filterkondensator 25 auf. Die drei Kondensatoren 25 des Netzfilters 14 sind sternförmig zusammengeschaltet. Die Filterspulen 23 und/oder die Filterwiderstände 24 können sehr klein dimensioniert oder gegebenenfalls Null sein. Alternativ kann das Netzfilter 14 auch als Dreieckschaltung ausgeführt sein.

Jeder der Verbindungspunkte a der beiden Schalter 17, 18 des Stromrichters 12 ist über eine erste Induktivität 27 mit jeweils einer Phase des Netzfilters 14 verbunden. Die Verbindungpunkte b der jeweiligen ersten Induktivitäten 27 und der zugehörigen Phase des Netzfilters 14 sind jeweils über eine zweite Induktivität 28 mit dem Energieversorgungsnetz 21 verbindbar.

In bestimmten Fällen, insbesondere in Abhängigkeit von der Netzimpedanz und den vorhandenen Netzoberschwingungen, kann die zweite Induktivität 28 gegebenenfalls auch entfallen.

Die Aufladeschaltung 15 weist pro Phase eine Serienschaltung aus einer Aufladespule 31, einem Aufladewiderstand 32 und einem ersten Schalter 33 auf. Diese Serienschaltung ist zwischen den zugehörigen Verbindungspunkt b und die jeweilige Phase des Energieversorgungsnetzes 21 geschaltet. Die drei Schalter 33 sind beispielhaft als erstes Schütz 34 ausgebildet.

Im Ausführungsbeispiel der Figur 1 sind die phasenweise vorhandenen Serienschaltungen des Netzfilters 14 somit direkt mit den phasenweise vorhandenen Serienschaltungen der Aufladeschaltung 15 verbunden.

Weiterhin weist die elektrische Schaltung 10 drei zweite Schalter 36 auf, die zwischen die jeweiligen zweiten Induktivitäten 28 und die drei Phasen des Energieversorgungsnetzes 21 geschaltet sind. Die drei Schalter 36 sind beispielhaft als zweites Schütz 37 ausgebildet.

Es wird von einem Zustand der elektrischen Schaltung 10 ausgegangen, in dem der Zwischenkreiskondensator 13 und die Filterkondensatoren 25 des Netzfilters 14 weitgehend oder vollständig entladen sind. Zum Starten des Betriebs des Stromrichters 12 müssen diese Energiespeicher zuerst in Abhängigkeit von dem vorgesehenen Netzbetrieb des Stromrichters 12 aufgeladen werden. Zumindest müssen der Zwischenkreiskondensator 13 und die Filterkondensatoren 25 des Netzfilters 14 auf eine Spannung aufgeladen werden, die etwa der im Netzbetrieb auftretenden Spannung entspricht.

Zu diesem Zweck werden zum Starten des Betriebs des Stromrichters 12 die ersten Schalter 33 bei offenen zweiten Schaltern 36 geschlossen. Diese Funktion kann mit Hilfe der beiden Schütze 34, 37 durchgeführt werden.

Es entsteht damit eine elektrische Verbindung von dem Energieversorgungsnetz 21 über die ersten Schalter 33, die Aufladespulen 31, die Aufladewiderstände 32, die ersten Induktivitäten 27 und die Dioden 19 zu dem Zwischenkreiskondensator 13. Über diese elektrische Verbindung wird der Zwischenkreiskondensator 13 aufgeladen.

Weiterhin entsteht eine elektrische Verbindung von dem Energieversorgungsnetz 21 über die ersten Schalter 33, die Aufladespulen 31, die Aufladewiderstände 32, die Filterspulen 23 und die Filterwiderstände 24 zu den Filterkondensatoren 25. Über diese elektrische Verbindung werden die Filterkondensatoren 25 des Netzfilters 14 aufgeladen.

Der Zwischenkreiskondensator 13 und die Filterkondensatoren 25 werden also über dieselben Aufladewiderstände 32 und dieselben zugehörigen Schalter 33 aufgeladen.

Die Aufladespulen 31 und die Aufladewiderstände 32 sind derart dimensioniert, dass die Spannungen an dem Zwischenkreiskondensator 13 und den Filterkondensatoren 25 des Netzfilters 14 in einer erwünschten Weise der Spannung des Energieversorgungsnetzes 21 folgen. Für die Funktion der Aufladeschaltung 15 sind die Aufladespulen 31 nicht zwingend erforderlich. Ohne Aufladespulen 31 weisen die Aufladewiderstände 32 vorzugsweise einen Wert größer als Null auf. Damit kann ein Überschwingen der Spannungen an den Filterkondensatoren 25 vermindert oder vermieden werden.

Bei vorhandenen Aufladespulen 31 können die Aufladewiderstände 32 vorzugsweise derart dimensioniert werden, dass der zu ladende Zwischenkreiskondensator 13 und die zu ladenden Filterkondensatoren 25 innerhalb von erwünschten Spannungsgrenzen verbleiben. Sofern die Einhaltung der erwünschten Spannungsgrenzen auch ohne Aufladewiderstände 32 möglich ist, so können diese bei vorhandenen Aufladespulen 31 entfallen.

Sobald insbesondere die Spannungen an den Filterkondensatoren 25 des Netzfilters 14 der Spannung des Energieversorgungsnetzes 21 folgen, dann können bei geschlossenen ersten Schaltern 33 die zweiten Schalter 36 geschlossen werden. Danach können die ersten Schalter 33 geöffnet werden. Dies kann mit Hilfe der beiden Schütze 34, 37 durchgeführt werden. Damit geht der Stromrichter 12 in seinen Normalbetrieb über.

In der Figur 2 ist eine elektrische Schaltung 10' gezeigt, die weitgehend der Schaltung 10 der Figur 1 entspricht. Übereinstimmende Bauteile sind deshalb mit den gleichen Bezugszeichen versehen. Insoweit wird auf die vorstehende Beschreibung der Figur 1 vollumfänglich Bezug genommen.

Der einzige Unterschied zwischen den Figuren 1 und 2 besteht darin, dass die pro Phase vorhandenen Serienschaltungen, jeweils bestehend aus der Aufladespule 31, dem Aufladewiderstand 32 und dem Schalter 33, nicht - wie in der Schaltung 10 der Figur 1 - mit den jeweils zugehörigen Verbindungspunkten b verbunden sind, sondern dass diese Serienschaltungen bei der Schaltung 10' der Figur 2 mit den jeweils zugehörigen Verbindungspunkten a verbunden sind.

Im Ausführungsbeispiel der Figur 2 sind somit die phasenweise vorhandenen Serienschaltungen des Netzfilters 14 über die ersten Induktivitäten 27 mit den phasenweise vorhandenen Serienschaltungen der Aufladeschaltung 15 verbunden.

Bei geschlossenen Schaltern 33 werden die Filterkondensatoren 25 damit unter anderem über die ersten Induktivitäten 27 aufgeladen, während die Aufladung des Zwischenkondensators 13 nicht über die ersten Induktivitäten 27 erfolgt.

Abgesehen von einer gegebenenfalls erforderlichen Anpassung der Dimensionierungen der ersten Induktivitäten 27, der Filterspulen 23 und/oder der Aufladespulen 31 stimmt die Funktionsweise der Schaltung 10' der Figur 2 mit der Funktionsweise der Schaltung 10 der Figur 1 überein. Insoweit wird nochmals auf die vorstehenden Erläuterungen zur Figur 1 verwiesen.

## Patentansprüche

1. Elektrische Schaltung (10) mit einem Stromrichter (12), an den ein Zwischenkreiskondensator (13) angeschlossen ist, mit einem Netzfilter (14), das mindestens einen Filterkondensator (25) aufweist, sowie mit einer Aufladeschaltung (15), die mindestens eine mit einem Energieversorgungsnetz (21) verbundene Serienschaltung bestehend aus einem ersten Schalter (33) und einem Aufladewiderstand (32) aufweist, **dadurch gekennzeichnet, dass** bei geschlossenem ersten Schalter (33) der Zwischenkreiskondensator (13) und der Filterkondensator (25) über den Aufladewiderstand (32) mit dem Energieversorgungsnetz (21) verbunden sind.

2. Elektrische Schaltung (10) nach Anspruch 1, wobei der Serienschaltung mindestens ein zweiter Schalter (36) parallelgeschaltet ist, der bei geschlossenem ersten Schalter (33) geöffnet ist, insbesondere während einer Aufladung des Zwischenkreiskondensators (13) und des Filterkondensators (25).

3. Elektrische Schaltung (10) nach einem der vorstehenden Ansprüche, wobei der Filterkondensator (25) des Netzfilters (14) und die Serienschaltung der Aufladeschaltung (15) miteinander verbunden sind, und wobei der Verbindungspunkt (b) mit dem Stromrichter (12) verbunden ist.

4. Elektrische Schaltung (10) nach einem der vorstehenden Ansprüche, wobei zu dem Filterkondensator (25) des Netzfilters (14) mindestens eine Filterspule (23) und/oder ein Filterwiderstand (24) in Serie geschaltet sind/ist.

5. Elektrische Schaltung (10) nach einem der vorstehenden Ansprüche, wobei die Aufladeschaltung (15) mindestens eine in Serie geschaltete Aufladespule (31) aufweist.

6. Elektrische Schaltung (10) nach einem der vorstehenden Ansprüche, wobei der/die Schalter (33, 37) als Schütz/e (34, 37) ausgebildet ist/sind.

7. Verfahren zum Betreiben einer elektrischen Schaltung (10), wobei die elektrische Schaltung (10) mit einem Stromrichter (12) versehen ist, an den ein Zwischenkreiskondensator (13) angeschlossen ist, und mit einem Netzfilter (14) versehen ist, das mindestens einen Filterkondensator (25) aufweist, sowie mit einer Aufladeschaltung (15) versehen ist, die mindestens eine mit einem Energieversorgungsnetz (21) verbundene Serienschaltung bestehend aus einem ersten Schalter (33) und einem Aufladewiderstand (32) aufweist, **dadurch gekennzeichnet, dass** durch ein Schließen des ersten Schalters (33) der Zwischenkreiskondensator (13) und der Filterkondensator (25) über den Aufladewiderstand (32) mit dem Energieversorgungsnetz (21) verbunden werden.

8. Verfahren nach Anspruch 7, wobei der Zwischenkreiskondensator (13) und der Filterkondensator (25) über den Aufladewiderstand (32) aufgeladen werden.

9. Verfahren nach Anspruch 8, wobei das Aufladen des Zwischenkreiskondensators (25) und des Filterkondensators (25) zum Starten des Betriebs des Stromrichters (12) durchgeführt wird.

10. Verfahren nach einem der Ansprüche 7 bis 9, wobei die elektrische Schaltung mit einem der Serienschaltung parallelgeschalteten zweiten Schalter (36) versehen ist, der nach erfolgter Aufladung geschlossenen wird.

11. Verfahren nach Anspruch 10, wobei für einen Normalbetrieb des Stromrichters (12) der zweite Schalter (36) geschlossen und der erste Schalter (33) geöffnet wird.
